(19) Europäisches Patentamt
European Patent Office
Office européen des brevets

(11) **EP 4 708 987 A1**

(12) **EUROPEAN PATENT APPLICATION**
published in accordance with Art. 153(4) EPC

(43) Date of publication:
**11.03.2026 Bulletin 2026/11**

(21) Application number: **23935933.4**

(22) Date of filing: **05.05.2023**

(51) International Patent Classification (IPC):
*H04W 64/00* (2009.01)

(52) Cooperative Patent Classification (CPC):
**H04W 24/08; H04W 64/00**

(86) International application number:
**PCT/CN2023/092329**

(87) International publication number:
**WO 2024/229604 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quectel Wireless Solutions Co., Ltd.
Shanghai 201601 (CN)**

(72) Inventors:
• ZHAO, Zheng
  **Shanghai, 201601 (CN)**
• LYU, Ling
  **Shanghai, 201601 (CN)**
• YANG, Zhongzhi
  **Shanghai, 201601 (CN)**

(74) Representative: **Fish & Richardson P.C.
Highlight Business Towers
Mies-van-der-Rohe-Straße 8
80807 München (DE)**

(54) **COMMUNICATION METHOD, TERMINAL DEVICE, AND NETWORK DEVICE**

(57)      A method for communication, a terminal device, and a network device are provided. The method includes: a terminal device obtaining first signal quality of a first signal and second signal quality of a second signal, and the terminal device determining first differential signal quality based on the first signal quality and the second signal quality. The first signal and the second signal are respectively sent or received by different network devices, and the first differential signal quality is used to implement positioning of the terminal device. The terminal device may process the first signal quality and the second signal quality to obtain the first differential signal quality. That is, based on the processing of the terminal device, one piece of data may be obtained based on the two pieces of data. Therefore, in the subsequent transmission process, transmission of at least one piece of data may be reduced, thereby reducing the amount of data that flows into a location server and reducing communication and calculation pressure of the location server. In addition, because the amount of transmitted data is reduced, the present disclosure may further reduce packet loss during data transmission.

FIG. 2

**Description**

**TECHNICAL FIELD**

The present disclosure relates to the field of communication technology, and more specifically to a method for communication, a terminal device, and a network device.

**BACKGROUND**

In the process of positioning based on signal quality, the terminal device needs to send the signal quality to the network device. In some cases, a volume of data corresponding to the signal quality may be substantial. For example, when a large number of terminal devices connect to the communication system, the network needs to receive a significant amount of signal quality data. If a volume of transmitted data is large, it may lead to communication congestion, poor real-time performance of positioning, etc.

**SUMMARY**

The present disclosure provides a method for communication, a terminal device, and a network device. Various aspects related to the present disclosure are described below.

According to a first aspect, a method for communication is provided, including: obtaining, by a terminal device, first signal quality of a first signal and second signal quality of a second signal; and determining, by the terminal device, first differential signal quality based on the first signal quality and the second signal quality; where the first signal and the second signal are respectively sent or received by different network devices, and the first differential signal quality is used to implement positioning of the terminal device.

In some embodiments, the terminal device determines second differential signal quality based on the first signal quality.

In some embodiments, the first signal is sent or received by a master network device, and the master network device is located in a first region; and the first region includes a plurality of network devices, and the master network device is selected by the terminal device from the plurality of network devices.

In some embodiments, in a case that a first condition is met, a first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being minimum; and/or among the plurality of network devices, the quality of the signal transmitted by the first network device being best.

In some embodiments, the first differential signal quality is a difference between the second signal quality and the first signal quality.

In some embodiments, the first differential signal quality D satisfies: $\log D = \log \frac{R_2}{R_1}$, where $R_2$ represents the second signal quality, and $R_1$ represents the first signal quality.

In some embodiments, the first signal quality includes one or more of: reference signal received power (RSRP) of the first signal; reference signal received quality (RSRQ) of the first signal; a received signal strength indicator (RSSI) of the first signal; and a signal to interference plus noise ratio (SINR) of the first signal.

In some embodiments, in a case that the first signal quality includes the RSRP of the first signal, the RSRP satisfies: $RSRP = \frac{(RSRQ) * RSSI}{N}$, where N is a number of resource blocks in an RSSI measurement bandwidth of a carrier.

In some embodiments, the method further includes: sending, by the terminal device, the first differential signal quality.

According to a second aspect, a method for communication is provided, including: receiving, by a first network device, differential signal quality sent by a terminal device; where the differential signal quality is determined based on first signal quality of a first signal and second signal quality of a second signal, the differential signal quality is used to implement positioning of the terminal device, and the first signal and the second signal are respectively sent or received by different network devices.

In some embodiments, the terminal device determines second differential signal quality based on the first signal quality.

In some embodiments, the first signal is sent or received by a master network device, and the master network device is located in a first region; and the first region includes a plurality of network devices, and the master network device is selected by the terminal device from the plurality of network devices.

In some embodiments, in a case that a first condition is met, a first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being minimum; and/or among the plurality of network devices, the quality of the signal transmitted by the first network device being best.

In some embodiments, the first differential signal quality is a difference between the second signal quality and the first signal quality.

In some embodiments, the first differential signal quality D satisfies: $\log D = \log \frac{R_2}{R_1}$ , where $R_2$ represents the second signal quality, and $R_1$ represents the first signal quality.

In some embodiments, the first signal quality includes one or more of: RSRP of the first signal; RSRQ of the first signal; RSSI of the first signal; and SINR of the first signal.

In some embodiments, in a case that the first signal quality includes the RSRP of the first signal, the RSRP satisfies: $RSRP = \frac{(RSRQ)*RSSI}{N}$ , where N is a number of resource blocks in an RSSI measurement bandwidth of a carrier.

According to a third aspect, a terminal device is provided, including: an obtaining unit, configured to obtain first signal quality of a first signal and second signal quality of a second signal; and a determining unit, configured to determine first differential signal quality based on the first signal quality and the second signal quality; where the first signal and the second signal are respectively sent or received by different network devices, and the differential signal quality is used to implement positioning of the terminal device.

In some embodiments, the terminal device determines second differential signal quality based on the first signal quality.

In some embodiments, the first signal is sent or received by a master network device, and the master network device is located in a first region; and the first region includes a plurality of network devices, and the master network device is selected by the terminal device from the plurality of network devices.

In some embodiments, in a case that a first condition is met, a first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being minimum; and/or among the plurality of network devices, the quality of the signal transmitted by the first network device being best.

In some embodiments, the first differential signal quality is a difference between the second signal quality and the first signal quality.

In some embodiments, the first differential signal quality D satisfies: $\log D = \log \frac{R_2}{R_1}$ , where $R_2$ represents the second signal quality, and $R_1$ represents the first signal quality.

In some embodiments, the first signal quality includes one or more of: RSRP of the first signal; RSRQ of the first signal; RSSI of the first signal; and SINR of the first signal.

In some embodiments, in a case that the first signal quality includes the RSRP of the first signal, the RSRP satisfies: $RSRP = \frac{(RSRQ)*RSSI}{N}$ , where N is a number of resource blocks in an RSSI measurement bandwidth of a carrier.

In some embodiments, the terminal device further includes: a sending unit, configured to send the first differential signal quality.

According to a fourth aspect, a network device is provided, including: a receiving unit, configured to receive first differential signal quality sent by a terminal device; where the first differential signal quality is determined based on first signal quality of a first signal and second signal quality of a second signal, the first differential signal quality is used to implement positioning of the terminal device, and the first signal and the second signal are respectively sent or received by different network devices.

In some embodiments, the terminal device determines second differential signal quality based on the first signal quality.

In some embodiments, the first signal is sent or received by a master network device, and the master network device is located in a first region; and the first region includes a plurality of network devices, and the master network device is selected by the terminal device from the plurality of network devices.

In some embodiments, in a case that a first condition is met, a first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being minimum; and/or among the plurality of network devices, the quality of the signal transmitted by the first network device being best.

In some embodiments, the first differential signal quality is a difference between the second signal quality and the first signal quality.

In some embodiments, the first differential signal quality D satisfies: $\log D = \log \frac{R_2}{R_1}$ , wherein $R_2$ represents the second signal quality, and $R_1$ represents the first signal quality.

In some embodiments, the first signal quality includes one or more of: RSRP of the first signal; RSRQ of the first signal; RSSI of the first signal; and SINR of the first signal.

In some embodiments, in a case that the first signal quality includes the RSRP of the first signal, the RSRP satisfies: $RSRP = \frac{(RSRQ)*RSSI}{N}$ , where N is a number of resource blocks in an RSSI measurement bandwidth of a carrier.

According to a fifth aspect, a terminal device is provided, including: a processor and a memory, where the memory is configured to store one or more computer programs, and the processor is configured to invoke the one or more computer programs in the memory to cause the terminal device to perform some or all of operations in the method according to the first aspect.

According to a sixth aspect, a network device is provided, including: a processor, a memory and a transceiver, where the memory is configured to store one or more programs, and the processor is configured to invoke the one or more programs in the memory to cause the network device to perform some or all of operations in the method according to the second aspect.

According to a seventh aspect, an embodiment of the present disclosure provides a communication system, where the system includes the terminal device and/or the network device described above. In another possible design, the system may further include another device in the solution provided in the embodiments of the present disclosure that interacts with the terminal device or the network device.

According to an eighth aspect, an embodiment of the present disclosure provides a computer-readable storage medium, where the computer-readable storage medium stores a computer program, and the computer program causes the terminal device and/or the network device to perform some or all of the operations in the methods in the foregoing aspects.

According to a ninth aspect, an embodiment of the present disclosure provides a computer program product, where the computer program product includes a non-transitory computer-readable storage medium storing a computer program, and the computer program is executable to cause the terminal device and/or the network device to perform some or all of the operations in the methods in the foregoing aspects. In some implementations, the computer program product may be a software installation package.

According to a tenth aspect, an embodiment of the present disclosure provides a chip, where the chip includes a memory and a processor, and the processor may invoke and run a computer program from the memory, to implement some or all of the operations described in the methods in the foregoing aspects.

The terminal device may process the first signal quality and the second signal quality to obtain the first differential signal quality. That is, based on the processing of the terminal device, one piece of data may be obtained based on two pieces of data. Therefore, in the subsequent transmission process, transmission of at least one piece of data may be reduced, thereby reducing the amount of data that flows into the location server and reducing communication and calculation pressure of the location server. In addition, because the amount of transmitted data is reduced, the present disclosure may further reduce packet loss during data transmission.

## BRIEF DESCRIPTION OF THE DRAWINGS

FIG. 1 is a schematic diagram of a wireless communication system applied in an embodiment of the present disclosure.

FIG. 2 is a schematic flow diagram of a method for communication provided in an embodiment of the present disclosure.

FIG. 3 is an example diagram of an application scenario in an embodiment of the present disclosure.

FIG. 4 is a schematic structural diagram of a terminal device provided in an embodiment of the present disclosure.

FIG. 5 is a schematic structural diagram of a network device provided in an embodiment of the present disclosure.

FIG. 6 is a schematic structural diagram of an apparatus for communication provided in an embodiment of the present disclosure.

## DETAILED DESCRIPTION OF THE EMBODIMENTS

The technical solutions in the present disclosure will be described below with reference to the accompanying drawings. For ease of understanding, terms involved in the present disclosure are described below.

COMMUNICATION SYSTEM

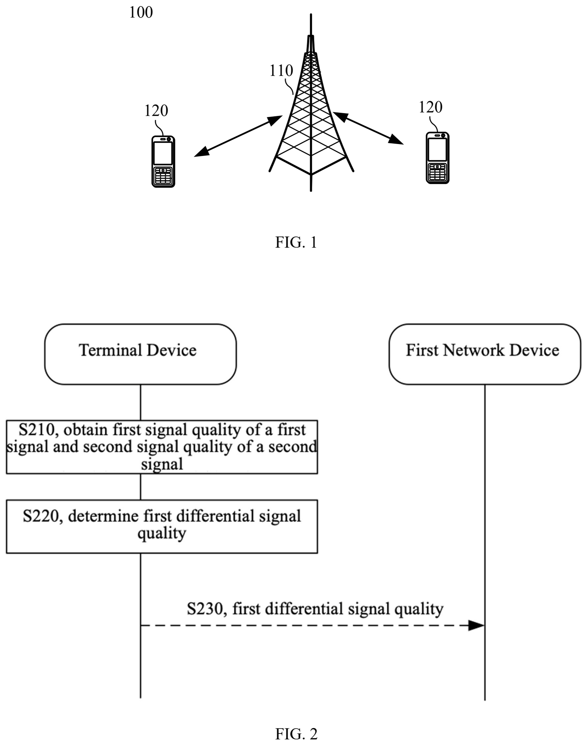

FIG. 1 is a wireless communication system 100 applied in embodiments of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc.,

which is not limited in the embodiments of the present disclosure.

It should be understood that the technical solutions in the embodiments of the present disclosure may be applied to various communication systems, for example, a 5th generation (5G) or new radio (NR) system, a 5G advanced system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the terminal device may serve as a base station. For example, the terminal device may serve as a scheduling entity that provides a sidelink signal between UEs in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal. The network device may also include an access network device. The access network device may also be referred to as a wireless access network device or a base station, etc. The access network device in the embodiments of the present disclosure may refer to a radio access network (RAN) node (or device) that accesses the terminal device to a wireless network. The access network device may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the access network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The communication devices involved in a wireless communication system may include not only the access network device and the terminal device but also a core network device. The core network device may also be a network device.

The core network device in the embodiments of the present disclosure may include a device that processes and forwards signaling and data for users. For example, the core network device may include a core access and mobility management function (AMF), a session management function (SMF), as well as a user plane gateway, a location server, and other core network devices. Among these, the user plane gateway may be a server having functions such as mobility management, routing, and forwarding of user plane data, typically located on the network side, such as a serving gateway (SGW), a packet data network gateway (PGW), or a user plane function (UPF), etc. The AMF and SMF can be analogous to a mobility management entity (MME) in LTE systems. The AMF is primarily responsible for access control, and the SMF is primarily responsible for session management. Of course, the core network may also include other network elements, which are not listed here.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

POSITIONING TECHNOLOGY

With increasing maturity of communication technologies, certain communication systems (such as 5G systems) can implement an ever-growing number of communication algorithms. These communication algorithms may include high-speed data transmission, positioning technology, etc. For example, indoor and outdoor positioning and navigation systems, based on satellite navigation technologies represented by BeiDou and supplemented by technologies such as ultra wideband (UWB) and 5G, are profoundly influencing modern lifestyles.

Some wireless communication systems may include servers. Servers typically have the following characteristics: high computational power, large storage capacity, and high throughput efficiency. Therefore, servers can simultaneously perform massive data computations and execute algorithms of higher complexity. Consequently, in related technologies, calculation of location coordinates of the terminal device can be conducted on servers, which may also be referred to as location servers.

The location server may be a network device with positioning capability provided by an operator. The network device with positioning capability may be the core network device or a cloud server. For example, the location server involved in the embodiments of the present disclosure may include one or more of a location management function (LMF), a location management component (LMC), or a local location management function (LLMF) in the network device, which is not limited in the present disclosure.

In some embodiments, a location of the terminal device may be determined based on signal quality, i.e., positioning of the terminal device is achieved. For ease of understanding, a positioning process is described below in terms of the positioning based on signal quality. A plurality of network devices (such as access network devices) may be set up in a region to be positioned to send or receive signals. Correspondingly, the terminal device may receive or send signals and record signal quality of each signal. The network device may receive the signal quality of these signals. Furthermore, the location server may calculate a location of the terminal device based on the signal quality of these signals, locations of the plurality of network devices, and a positioning algorithm. Here, the signal quality may refer to received signal strength (RSS), i.e., the positioning algorithm may be referred to as an RSS positioning algorithm.

Thus, in the process of positioning based on the signal quality, the terminal device needs to send the signal quality to the network device. In some cases, the volume of data corresponding to the transmitted signal quality may be substantial. For example, when a large number of terminal devices connect to the communication system, the network needs to receive a significant amount of signal quality data. If the volume of transmitted data is large, it may lead to communication congestion, poor real-time performance of the positioning, etc.

Embodiments of the present disclosure provide a method for communication as shown in FIG. 2, to resolve the foregoing problems. The method shown in FIG. 2 may be implemented by a terminal device and/or a first network device. The method shown in FIG. 2 may include operations S210 and S220.

At operation S210, the terminal device obtains first signal quality of a first signal and second signal quality of a second signal.

Both the first signal and the second signal may be signals for positioning. The signal for positioning may include a synchronization signal (SS). The synchronization signal may include, for example, an auxiliary synchronization signal (or referred to as a secondary synchronization signal)

The signal quality may be represented by RSS. In some embodiments, the received signal strength may be indicated by one or more of: reference signal received power (RSRP), reference signal received quality (RSRQ), received signal strength indicator (RSSI), signal to interference plus noise ratio (SINR). In some embodiments, the received signal strength may be represented by one or more of: synchronization signal-reference signal received power (SS-RSRP), synchronization signal-reference signal received quality (SS-RSRQ), and synchronization signal-received signal strength indicator (SS-RSSI). For description of SS-RSRP, SS-RSRQ, or SS-RSSI, reference may be made to related standards (e.g., 3GPP TS 38.215 V16.0.1). Taking the SS-RSRP as an example, the SS-RSRP may be a linear average value of the power of resource elements carrying the auxiliary synchronization signal. A unit of SS-RSRP may be dBm. A measurement time of the SS-RSRP may be limited to be within a measurement timing configuration (SMTC) duration of a synchronization signal/physical broadcast channel (SS/PBCH).

As an implementation, the first signal quality may include one or more of: RSRP or SS-RSRP of the first signal, RSRQ or SS-RSRQ of the first signal, RSSI or SS-RSSI of the first signal, and SINR of the first signal.

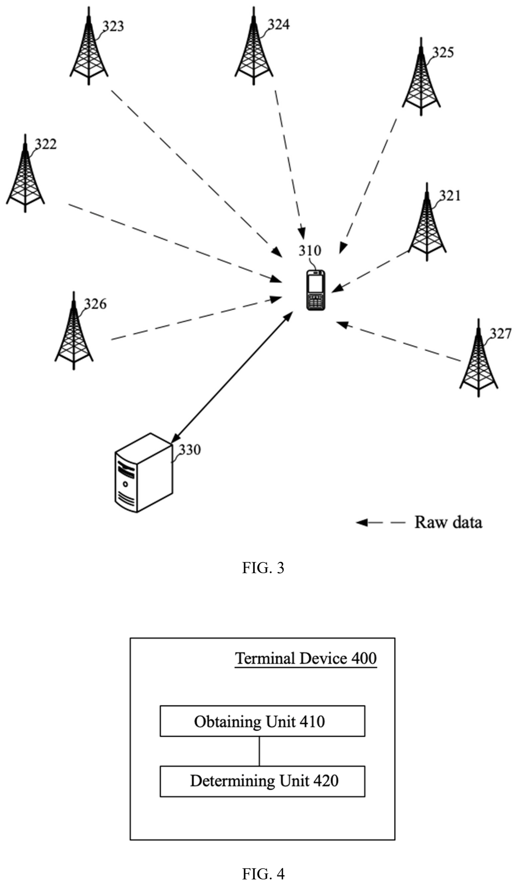

The first signal and the second signal may be sent or received by different network devices, respectively. Different network devices may all belong to a first region. The first region may be, for example, an observable region or a to-be-positioned region of the terminal device. In some embodiments, the first region may include a plurality of network devices, and the first signal and the second signal may be sent by two of the plurality of network devices. As shown in FIG. 3, the first region 300 includes the access network device 321 to the access network device 327. The first signal and the second signal may be sent by any two of the access network device 321 to the access network device 327. For example, the first signal may be sent by the access network device 323, and the second signal may be sent by the network device 325.

The present disclosure does not limit the method for the terminal device to obtain the first signal quality and/or the second signal quality. For example, the terminal device may obtain corresponding first signal quality and/or second signal quality by measuring the first signal and/or the second signal. Alternatively, the terminal device may receive the first signal quality and/or the second signal quality. The first signal quality and/or the second signal quality may be sent by corresponding network devices.

In a case that the first signal quality and/or the second signal quality are transmitted by the network device, the first signal quality and/or the second signal quality may be carried in raw data. Continuing to take FIG. 3 as an example, the first signal quality may be carried in first raw data sent by the access network device 321. The second signal quality may be carried in second raw data sent by the access network device 323. As shown in FIG. 3, the access network device 321 to the access network device 327 may all send raw data including signal quality to the terminal device 310. It should be noted that the raw data may further include other data information, which is not limited in the present disclosure.

At operation S220, the terminal device determines first differential signal quality.

The first differential signal quality may be differential signal quality determined based on the first signal quality and the second signal quality. The first signal and the second signal are sent or received by two different network devices, and therefore, the first differential signal quality may also be referred to as differential signal quality between two network devices.

In some embodiments, the first differential signal quality may be a difference between the second signal quality and the first signal quality. That is, the first differential signal quality D satisfies: $D=R_2-R_1$ or $D=R_1-R_2$, where $R_2$ represents the second signal quality, and $R_1$ represents the first signal quality.

It should be understood that in a case that the signal quality is represented by the RSS, the differential signal quality may be represented by difference of received signal strength (DRSS). For example, in a case that the RSS is represented by RSRP or SS-RSRP, the differential signal quality may be represented by difference of reference signal received power (SS-DRSRP).

Taking the signal quality represented by the SS-RSRP as an example, the SS-DRSRP may be a difference of a linear average value of the power of resource elements carrying the auxiliary synchronization signal. A unit of the SS-DRSRP may be dBm. The present disclosure does not limit the number of resource elements in the measurement period used to determine the SS-DRSRP. The terminal device may determine, by itself, the number of resource elements in the measurement period used to determine the SS-DRSRP. The criterion that the terminal device determines the number of resource elements in the measurement period of the SS-DRSRP may include that related indicators meet the measurement precision requirement.

According to operations S210 and S220, the terminal device may process the first signal quality and the second signal quality to obtain the first differential signal quality. That is, based on the processing of the terminal device, one piece of data may be obtained based on two pieces of data. Therefore, in a subsequent transmission process, based on the present disclosure, transmission of at least one piece of data may be reduced, thereby reducing the amount of data that flows into the location server and reducing communication and calculation pressure of the location server. In addition, since the amount of transmitted data is reduced, the present disclosure may further reduce packet loss during data transmission. For example, in the case that data from the entire Shanghai city simultaneously flows into the location server, assuming that the number of the terminal devices is 1 million (100W), if data is uploaded based on related technologies, the first amount of data to be transmitted may be the product of 100W and the number of base stations that receive the data; if the data is uploaded based on the present disclosure, the second amount of data to be transmitted may be the product of 100W and the number of base stations that receive the data minus 1, Comparing the first amount and the second amount, it is seen that the transmission of at least 100W pieces of data may be reduced in present disclosure.

Based on the first differential signal quality, a differential positioning algorithm may be combined to position the terminal device. The present disclosure does not limit a specific implementation of the differential positioning algorithm. For example, the differential positioning algorithm may be implemented based on a least square (LS) algorithm, a mean average precision (MAP) algorithm, or a Levenberg-Marquardt (LM) algorithm.

As noted above, the differential signal quality may be obtained by calculating the difference in signal quality. Moreover, the differential signal quality may also be obtained through other calculation methods.

As an implementation, calculation of differential signal quality may be implemented based on a log operation. For example, the first differential signal quality D satisfies: $\log D = \log \frac{R_2}{R_1}$, or $\log D = \log \frac{R_1}{R_2}$, where $R_2$ represents the second signal quality, and $R_1$ represents the first signal quality. It is learned from the foregoing formula that the log operation may convert a subtraction form into a ratio form, thereby simplifying calculation of a subsequent positioning process. For example, in a process of positioning the terminal device, a path loss model may need to be used. For the path loss model, the differential signal quality in the log form is more convenient to calculate the path loss. Alternatively, in the subsequent positioning calculation process, based on the differential signal quality in the log form, information such as transmit power of the network device may not need to be obtained.

It is noted above that, in the first region, the positioning of the terminal device may be implemented. For example, based on the plurality of network devices in the first region, the terminal device may determine quality of a plurality of differential signals corresponding to the plurality of network devices, to implement positioning of the terminal device. It should be noted that the terminal device does not necessarily need to obtain quality of differential signals corresponding to all network devices in the first region and may obtain quality of a part of differential signals. For example, the positioning may be implemented by obtaining quality of differential signals corresponding to two network devices. Therefore, the positioning of the terminal device may be implemented by obtaining quality of at least two differential signals.

The quality of the plurality of differential signals may include second differential signal quality. In the present disclosure, the second differential signal quality may also be determined based on the first signal quality. Based on this, the quality of the plurality of differential signals used to determine the terminal device may be all determined based on the first signal quality. For this case, the network device that sends the first signal may be referred to as a master network device or a reference network device. That is, signal quality of a signal sent by the master network device may be used to determine quality of at least two differential signals. For example, when the terminal device is in the first region, the differential signal quality may be determined based on the signal sent by the master network device.

The first region may further include a neighboring network device. For example, in the first region, other network devices other than the master network device may be neighboring network devices. For example, the first region may include 1+N network devices, where N is greater than 1. The 1+N network devices may include one master network device and N neighboring network devices. Taking N being 6 as an example, the first region may include 7 network devices, one of which is the master network device, and 6 of which are the neighboring network devices.

The differential signal quality may be determined based on signals sent or received by the master network device and the neighboring network devices, respectively. For example, signal quality corresponding to the master network device received by the terminal device may be separately calculated with signal quality corresponding to each neighboring network device, to obtain differential signal quality between each neighboring network device and the master network device. The differential signal quality may satisfy: $DRSRP_n = RSRP_n - RSRP_0$, where $DRSRP_n$ represents the $n^{th}$ differential signal quality, $RSRP_0$ represents the signal quality corresponding to the master network device, and $RSRP_n$ represents the signal quality corresponding to the $N^{th}$ neighboring network device. The n may belong to [1, R], and R may be a positive integer. For example, R may be a number of neighboring network devices.

The following continues to describe with reference to FIG. 3. As shown in FIG. 3, the positioning of the terminal device 310 may be implemented by the access network device access network device 321 to the access network device 327 and the location server 330. The master network device may be the access network device 321, and other access network devices may be neighboring network devices. The neighboring network device 322 to the neighboring network device 327 may transmit the SS-RSRP into the terminal device 310. Correspondingly, the terminal device may continuously receive signals sent by the master network device 321 and the neighboring network device 322 to the neighboring network device 327 and perform differential calculation on the received SS-RSRP to obtain corresponding differential signal quality.

It should be noted that, as described above, the network device may be a base station, a location server, or the like. In a case that the network device is the base station, the master network device may also be referred to as a master base station, and the neighboring network device may also be referred to as a neighboring base station.

In some embodiments, the master network device and/or the neighboring network device may be fixed or determined. For example, no matter where the terminal device is located in the first region, neither the master network device nor the neighboring network device changes. In some embodiments, the master network device and the neighboring network device may be varied. For example, when the terminal device is located at a first point, the master network device may be a first network device; and when the terminal device is located at a second point, the master network device may be another network device other than the first network device.

A method for determining the master network device and the neighboring network device is not limited in the present disclosure. For example, the master network device and the neighboring network device may be pre-configured or preset with values. In this case, the master network device and the neighboring network device may be fixed or determined. Alternatively, the master network device and the neighboring network device may be determined based on a state of the terminal device. In this case, the master network device and the neighboring network device may be fixed or variable. As an implementation, the terminal device may determine the master network device and the neighboring network device by itself.

As an implementation, when the terminal device enters the first region, the master network device and/or the neighboring network device may be determined based on the state of the terminal device, and the determined master network device does not change until the terminal device leaves the first region. As another implementation, when the terminal device is in the first region, the master network device and/or the neighboring network device may be dynamically changed or adjusted based on change of the state of the terminal device.

As an implementation, the plurality of network devices may include a first network device. In a case that a first condition is met, the first network device may be the master network device. The first condition may be, for example, related to one or both of: quality of a signal transmitted by the first network device, and a location relationship between the first network device and the terminal device.

The quality of the signal transmitted by the first network device may be represented by one or more of: RSRP, RSRQ, RSSI, and SINR. The signal transmitted by the first network device may be the first signal described above. The quality of the signal transmitted by the first network device may be the first signal quality described above. For example, the first condition may include that the quality of the signal transmitted by the first network device meets a certain condition. For example, among the plurality of network devices in the first region, if the quality of the signal transmitted by the first network device is the best (e.g., the RSRP is maximum), the first network device may be the master network device. In this case, the first condition related to the quality of the signal may make a distance ratio greater than 1. The distance ratio may be a ratio of a distance between the terminal device and the neighboring network device and a distance between the terminal device and the master network device. For the differential signal quality, when the distance ratio is greater than 1, the differential signal quality calculated by the log operation may have an actual physical meaning, otherwise, the differential signal quality calculated by the log operation may be less than 0, which does not have the actual physical meaning.

The location relationship between the first network device and the terminal device may include one or more of: a distance, an angle, and the like between the first network device and the terminal device. Taking the distance as an example, the first condition may include, for example, that the distance between the first network device and the terminal device meets a certain condition. For example, the first condition may include: among the plurality of network devices, the distance between the first network device and the terminal device is minimum.

It should be understood that the signal quality may also reflect the distance between the first network device and the terminal device to a certain extent. That is, the better the signal quality, the closer the distance is; and the worse the signal quality, the farther the distance is. Other indexes that may reflect the distance between the first network device and the terminal device may also be related to the first condition. The first condition corresponding to these indexes corresponds to the first condition related to the distance.

It should be noted that the present disclosure does not limit factors related to the first condition. For example, the first condition may further be related to a cell home, a timing advance (TA), and a downlink decoding measurement result.

In some embodiments, after determining the master network device, the terminal device may send indication information to an access network device or a location server corresponding to a serving cell. The indication information may be used to indicate information of the master network device. The access network device or the location server corresponding to the serving cell may calculate first differential signal quality. That is, the first differential signal quality may also be determined at the network side.

In some embodiments, the network device satisfying a second condition may be used for positioning the terminal device. In other words, the terminal device is not necessarily positioned based on all the network devices in the first region. That is, the master network device and/or the neighboring network device for positioning the terminal device need to satisfy the second condition. It should be understood that when selecting a network device for positioning the terminal device, network devices that do not meet the second condition needs to be removed.

In some embodiments, the second condition may be related to the quality of the signal of the network device. For example, the second condition may include that the quality of the signal sent or received by the network device is greater than or equal to a first quality threshold, and/or the quality of the signal is less than or equal to a second quality threshold. In a case that the quality of the signal is represented by the RSRP, the first threshold may be, for example, 110 dB. The second threshold may be, for example, -40 dB. That is, when selecting the network device, network devices whose RSRP is greater than 40 dB and/or less than -110 dB need to be removed.

In some embodiments, the second condition may be related to the distance between the network device and the terminal device. For example, the distance between the network device and the terminal device cannot be too small. That is, a certain distance needs to be kept between the network device and the terminal device. The terminal device cannot be directly below the network device.

In some embodiments, the second condition may be related to horizontal dilution of precision (HDOP) of the network device. The second condition may include that the HDOP is less than a first precision threshold. That is, the HDOP needs to be small, i.e., a network device with a larger HDOP is avoided to be used for the positioning of the terminal device.

The setting of the second condition may screen out a suitable network device for positioning the terminal device to obtain a reasonable positioning result. For example, the second condition is set for the positioning of the Lagrange operator product algorithm to prevent a result matrix in the algorithm from becoming a singular matrix, thereby avoiding a situation that the result cannot be inverted and further avoiding a situation that the positioning result cannot be calculated.

As described above, the signal quality may be represented by RSRP. In a case that the differential signal quality needs to be calculated via the RSRP, the RSRP may be determined via indexes such as RSRQ and/or RSSI. For example, in a case that RSRP cannot be obtained, RSRP may be determined via indexes such as RSRQ and/or RSSI.

As an implementation, RSRP may satisfy:
$$\mathrm{RSRP} = \frac{(\mathrm{RSRQ})*\mathrm{RSSI}}{N}$$ , where N is a number of resource blocks in an RSSI measurement bandwidth of a carrier. As an implementation, reference may be made to related standards (3GPP TS 38.215 V16.0.1) to determine a conversion formula between RSRP, RSSI and RSRQ.

It should be noted that the foregoing formula may be appropriately transformed. For example, RSRP may also satisfy: $N \times \mathrm{RSRP} = \mathrm{RSRQ} \times \mathrm{RSSI}$.

As described above, the terminal device may upload the differential signal quality. That is, the method shown in FIG. 2 may further include operation S230.

At operation S230, the terminal device sends first differential signal quality. Correspondingly, the first network device receives the first differential signal quality.

It should be noted that the first network device that receives the first differential signal quality may be the master network device or the neighboring network device. The first network device may be a network device that sends or receives the first signal or the second signal or may not be a network device that sends or receives the first signal or the second signal.

The first network device may be the access network device or may be the location server. In a case that the first network device is the access network device, the first network device may forward the first differential signal quality to the location server.

The following describes by using an example in which the first network device that receives the first differential signal quality is the master network device with reference to FIG. 3. The master network device 321 may be responsible for time synchronization. The master network device 321 may also distinguish a unique identification code and time synchronization information of the terminal device and transmit data of the first differential signal quality uploaded by the mobile terminal (e.g., to the location server).

The first differential signal quality is sent via the terminal device, and the location server may obtain the first differential signal quality. Based on the first differential signal quality, the location server may calculate the location of the terminal device based on a DRSS algorithm.

Based on the foregoing method, the location server may directly obtain the differential signal quality. It should be understood that the location server may obtain the differential signal quality without performing secondary processing on the signal quality. This may reduce complexity of the positioning algorithm running in the location server.

In some embodiments, the terminal device may screen the first differential signal quality. The screening process may exclude the differential signal quality with a large error, thereby reducing the influence of the error at the network side on the positioning result. The screening criterion may be related to a line of sight (LOS)/non-line of sight (NLOS) type. At operation S230, the terminal device may transmit the screened first differential signal quality, thereby improving data transmission efficiency.

In some embodiments, based on the first differential signal quality, the terminal device may process the positioning algorithm locally. For example, the terminal device may determine rough location information of the terminal device based on the first differential signal quality.

As described above, the master network device and/or the neighboring network device may be determined by the terminal device itself. In this case, the terminal device may further report first information of the master network device and/or the neighboring network device. The first information may be reported to the location server. The first information may include, for example, an identity (ID) of the master network device and/or an ID of the neighboring network device.

It should be noted that the network device involved in the present disclosure, such as the first network device, the master network device, or the neighboring network device, may be existing network devices (e.g., a 5G base station and/or a 5G-A base station) in related communication systems. Therefore, in the related communication systems, the present disclosure can be implemented without additionally upgrading hardware and additionally laying hardware devices. In addition, the present disclosure also does not limit hardware composition of the communication system applying the present disclosure. For example, some hardware may be added to the 5G-A positioning system to enhance its performance, making it easier to promote. For another example, in an outdoor positioning application scenario with a complex environment and various LOS/NLOS environments, the present disclosure may also be applied. Therefore, the present disclosure has a great advantage and a commercial prospect.

The following describes the embodiments provided in the present disclosure in detail.

Operation 1: a pre-experiment trajectory of a test environment is set, and a base station identification number, a physical cell identity (PCI) and longitude and latitude coordinate information that may be received on a route are recorded as engineering parameters.

Operation 2: the terminal device receives raw data sent by the master network device and the neighboring network device. The raw data includes SS-RSRP.

Operation 3: the terminal device performs data preprocessing on the collected raw data.

Operation 4: the terminal device analyzes the preprocessed data to calculate SS-DRRP. If the SS-RSRP cannot be directly obtained, a conversion formula may be used: $SS-\ \ RSRP = \frac{(SS-RSRQ)*RSSI}{N}$ , where N is a number of resource blocks in an RSSI measurement bandwidth of an NR carrier.

Operation 5: the location server calculates coordinates of the terminal device in the experiment using the DRSS algorithm.

The foregoing describes the method embodiments provided in the present disclosure. The following describes apparatus embodiments provided in the present disclosure. It should be understood that descriptions of the method embodiments correspond to descriptions of the apparatus embodiments, and therefore, reference may be made to the foregoing method embodiments for parts that are not described in detail.

FIG. 4 is a schematic structural diagram of a terminal device 400 according to an embodiment of the present disclosure. The terminal device 400 may include an obtaining unit 410 and a determining unit 420.

The obtaining unit 410 is configured to obtain first signal quality of a first signal and second signal quality of a second signal.

The determining unit 420 is configured to determine first differential signal quality based on the first signal quality and the second signal quality.

The first signal and the second signal are respectively sent or received by different network devices, and the differential signal quality is used to implement positioning of the terminal device.

In some embodiments, the terminal device determines second differential signal quality based on the first signal quality.

In some embodiments, the first signal is sent or received by a master network device, the master network device is located in a first region, the first region includes a plurality of network devices, and the master network device is selected by the terminal device from the plurality of network devices.

In some embodiments, in a case that a first condition is met, the first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being the minimum; and/or, among the plurality of network devices, the quality of the signal transmitted by the first network device being the best.

In some embodiments, the first differential signal quality is a difference between the second signal quality and the first signal quality.

In some embodiments, the first differential signal quality D satisfies: D satisfies: $\log D = \log \frac{R_2}{R_1}$ , where $R_2$ represents the second signal quality, and $R_1$ represents the first signal quality.

In some embodiments, the first signal quality includes one or more of: RSRP of the first signal; RSRQ of the first signal; RSSI of the first signal; and SINR of the first signal.

In some embodiments, in a case that the first signal quality includes the RSRP of the first signal, the RSRP satisfies: $RSRP = \frac{(RSRQ)*RSSI}{N}$ , where N is a number of resource blocks in an RSSI measurement bandwidth of a carrier.

In some embodiments, the terminal device further includes a sending unit, configured to send the first differential signal quality.

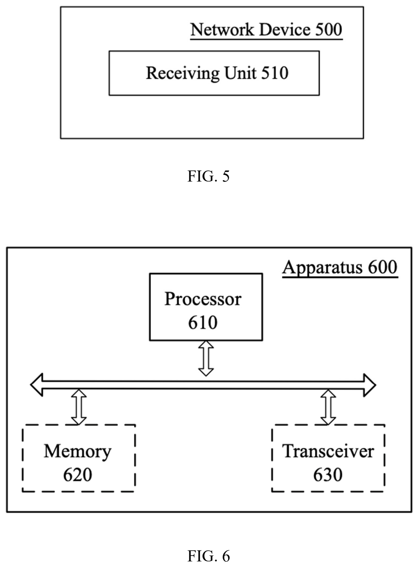

FIG. 5 is a schematic structural diagram of a network device 500 according to an embodiment of the present disclosure. The network device 500 includes a receiving unit 510.

The receiving unit 510 is configured to receive first differential signal quality sent by a terminal device. The first differential signal quality is determined based on first signal quality of the first signal and second signal quality of the second signal, the first differential signal quality is used to implement positioning of the terminal device, and the first signal and the second signal are respectively sent or received by different network devices.

In some embodiments, the terminal device determines second differential signal quality based on the first signal quality.

In some embodiments, the first signal is sent or received by a master network device, the master network device is located in a first region, the first region includes a plurality of network devices, and the master network device is selected by the terminal device from the plurality of network devices.

In some embodiments, in a case that a first condition is met, the first network device is the master network device, and the first condition is related to one or both of: quality of a signal transmitted by the first network device; and a location relationship between the first network device and the terminal device.

In some embodiments, the first condition includes: among the plurality of network devices included in the first region, a distance between the first network device and the terminal device being minimum; and/or, among the plurality of network devices, the quality of the signal transmitted by the first network device being the best.

In some embodiments, the first differential signal quality is a difference between the second signal quality and the first signal quality.

In some embodiments, the first differential signal quality D satisfies: $\log D = \log \frac{R_2}{R_1}$ , where $R_2$ represents the second signal quality, and $R_1$ represents the first signal quality.

In some embodiments, the first signal quality includes one or more of: RSRP of the first signal; RSRQ of the first signal; RSSI of the first signal; and SINR of the first signal.

In some embodiments, in a case that the first signal quality includes the RSRP of the first signal, the RSRP satisfies: $RSRP = \frac{(RSRQ)*RSSI}{N}$ , where N is a number of resource blocks in an RSSI measurement bandwidth of a carrier.

In an optional embodiment, the receiving unit 510 may be a transceiver 630. The terminal device 400 or the network device 500 may further include a memory 620 and/or a processor 610, as shown in FIG. 6.

FIG. 6 is a schematic structural diagram of an apparatus for communication according to an embodiment of the present disclosure. The dashed line in FIG. 6 indicates that the unit or module is optional. The apparatus 600 may be configured to implement the method described in the foregoing method embodiments. The apparatus 600 may be one or more of a chip, a terminal device, or a network device.

The apparatus 600 may include one or more processors 610, and the processor 610 may support the apparatus 600 to implement the method described in the foregoing method embodiments. The processor 610 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 600 may further include one or more memories 620 storing a program, and the program may be executed by the processor 610 to cause the processor 610 to perform the method described in the foregoing method embodiments. The memory 620 may be independent of the processor 610 or may be integrated into the processor 610.

The apparatus 600 may further include a transceiver 630, and the processor 610 may communicate with another device or chip via the transceiver 630. For example, the processor 610 may perform data transceiving with another device or chip via the transceiver 630.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" may be used interchangeably in the present disclosure. In addition, the terms used in the present disclosure are intended only to explain specific embodiments of the present disclosure and are not intended to limit the present disclosure. The terms "first", "second", "third" and "fourth" in the description and claims as well as the accompanying drawings of the present disclosure are used to distinguish between different objects and not to describe a particular order. Furthermore, the terms "including" and "having", and any variation thereof, are intended to cover non-exclusive inclusion.

In the embodiments of the present disclosure, the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communications system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In embodiments of the present disclosure, "including" may indicate either directly or indirectly including. Optionally, references to "including" in embodiments of the present disclosure may be replaced with "indicating" or " used to determine". For example, A including B may be replaced with A indicating B or A used to determine B.

In the embodiments of the present disclosure, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

**Claims**

1. A method for communication, comprising:

   obtaining, by a terminal device, first signal quality of a first signal and second signal quality of a second signal; and
   determining, by the terminal device, first differential signal quality based on the first signal quality and the second signal quality; wherein the first signal and the second signal are respectively sent or received by different network devices, and the first differential signal quality is used to implement positioning of the terminal device.

2. The method according to claim 1, wherein the terminal device determines second differential signal quality based on the first signal quality.

3. The method according to claim 2, wherein the first signal is sent or received by a master network device, and the master network device is located in a first region; and wherein the first region includes a plurality of network devices, and the master network device is selected by the terminal device from the plurality of network devices.

4. The method according to claim 3, wherein in a case that a first condition is met, a first network device is the master network device, and the first condition is related to one or both of:

   quality of a signal transmitted by the first network device; and
   a location relationship between the first network device and the terminal device.

5. The method according to claim 4, wherein the first condition includes:

   among the plurality of network devices included in the first region, a distance between the first network device and the terminal device being minimum; and/or,
   among the plurality of network devices, the quality of the signal transmitted by the first network device being best.

6. The method according to any one of claims 1 to 5, wherein the first differential signal quality is a difference between the second signal quality and the first signal quality.

7. The method according to any one of claims 1 to 5, wherein the first differential signal quality D satisfies:

   $\log D = \log \frac{R_2}{R_1}$, wherein $R_2$ represents the second signal quality, and $R_1$ represents the first signal quality.

8. The method according to any one of claims 1 to 7, wherein the first signal quality includes one or more of:

   reference signal received power, RSRP, of the first signal;
   reference signal received quality, RSRQ, of the first signal;
   a received signal strength indicator, RSSI, of the first signal; and
   a signal to interference plus noise ratio, SINR, of the first signal.

9. The method according to claim 8, wherein in a case that the first signal quality includes the RSRP of the first signal, the RSRP satisfies:
   $RSRP = \frac{(RSRQ)*RSSI}{N}$, wherein N is a number of resource blocks in an RSSI measurement bandwidth of a carrier.

10. The method according to any one of claims 1 to 9, further comprising:
    sending, by the terminal device, the first differential signal quality.

11. A method for communication, comprising:

    receiving, by a first network device, differential signal quality sent by a terminal device;
    wherein the differential signal quality is determined based on first signal quality of a first signal and second signal quality of a second signal, the differential signal quality is used to implement positioning of the terminal device, and the first signal and the second signal are respectively sent or received by different network devices.

12. The method according to claim 11, wherein the terminal device determines second differential signal quality based on the first signal quality.

13. The method according to claim 12, wherein the first signal is sent or received by a master network device, and the master network device is located in a first region; and wherein the first region includes a plurality of network devices, and the master network device is selected by the terminal device from the plurality of network devices.

14. The method according to claim 13, wherein in a case that a first condition is met, a first network device is the master network device, and the first condition is related to one or both of:

quality of a signal transmitted by the first network device; and

a location relationship between the first network device and the terminal device.

15. The method according to claim 14, wherein the first condition includes:

among the plurality of network devices included in the first region, a distance between the first network device and the terminal device being minimum; and/or,

among the plurality of network devices, the quality of the signal transmitted by the first network device being best.

16. The method according to any one of claims 11 to 15, wherein the first differential signal quality is a difference between the second signal quality and the first signal quality.

17. The method according to any one of claims 11 to 15, wherein the first differential signal quality D satisfies:

$$\log D = \log \frac{R_2}{R_1}$$, wherein $R_2$ represents the second signal quality, and $R_1$ represents the first signal quality.

18. The method according to any one of claims 11 to 17, wherein the first signal quality includes one or more of:

reference signal received power, RSRP, of the first signal;
reference signal received quality, RSRQ, of the first signal;
a received signal strength indicator, RSSI, of the first signal; and
a signal to interference plus noise ratio, SINR, of the first signal.

19. The method according to claim 18, wherein in a case that the first signal quality includes the RSRP of the first signal, the RSRP satisfies: $$RSRP = \frac{(RSRQ)*RSSI}{N}$$, wherein N is a number of resource blocks in an RSSI measurement bandwidth of a carrier.

20. A terminal device, comprising:

an obtaining unit, configured to obtain first signal quality of a first signal and second signal quality of a second signal; and
a determining unit, configured to determine first differential signal quality based on the first signal quality and the second signal quality;

wherein the first signal and the second signal are respectively sent or received by different network devices, and the differential signal quality is used to implement positioning of the terminal device.

21. The terminal device according to claim 20, wherein the terminal device determines second differential signal quality based on the first signal quality.

22. The terminal device according to claim 21, wherein the first signal is sent or received by a master network device, and the master network device is located in a first region; and wherein the first region includes a plurality of network devices, and the master network device is selected by the terminal device from the plurality of network devices.

23. The terminal device according to claim 22, wherein in a case that a first condition is met, a first network device is the master network device, and the first condition is related to one or both of:

quality of a signal transmitted by the first network device; and
a location relationship between the first network device and the terminal device.

24. The terminal device according to claim 23, wherein the first condition includes:

among the plurality of network devices included in the first region, a distance between the first network device and the terminal device being minimum; and/or,

among the plurality of network devices, the quality of the signal transmitted by the first network device being best.

25. The terminal device according to any one of claims 20 to 24, wherein the first differential signal quality is a difference between the second signal quality and the first signal quality.

26. The terminal device according to any one of claims 20 to 24, wherein the first differential signal quality D satisfies: $$\log D = \log \frac{R_2}{R_1}$$, wherein $R_2$ represents the second signal quality, and $R_1$ represents the first signal quality.

27. The terminal device according to any one of claims 20 to 26, wherein the first signal quality includes one or more of:

reference signal received power, RSRP, of the first signal;

reference signal received quality, RSRQ, of the first signal;

a received signal strength indicator, RSSI, of the first signal; and

a signal to interference plus noise ratio, SINR, of the first signal.

28. The terminal device according to claim 27, wherein in a case that the first signal quality includes the RSRP of the first signal, the RSRP satisfies: $\text{RSRP} = \frac{(RSRQ)*RSSI}{N}$ , wherein N is a number of resource blocks in an RSSI measurement bandwidth of a carrier.

29. The terminal device according to any one of claims 20 to 28, further comprising:
a sending unit, configured to send the first differential signal quality.

30. A network device, wherein the network device is a first network device, comprising:

a receiving unit, configured to receive first differential signal quality sent by a terminal device; wherein the first differential signal quality is determined based on first signal quality of a first signal and second signal quality of a second signal, the first differential signal quality is used to implement positioning of the terminal device, and the first signal and the second signal are respectively sent or received by different network devices.

31. The network device according to claim 30, wherein the terminal device determines second differential signal quality based on the first signal quality.

32. The network device according to claim 31, wherein the first signal is sent or received by a master network device, and the master network device is located in a first region; and wherein the first region includes a plurality of network devices, and the master network device is selected by the terminal device from the plurality of network devices.

33. The network device according to claim 32, wherein in a case that a first condition is met, the first network device is the master network device, and the first condition is related to one or both of:

quality of a signal transmitted by the first network device; and
a location relationship between the first network device and the terminal device.

34. The network device according to claim 33, wherein the first condition includes:

among the plurality of network devices included in the first region, a distance between the first network device and the terminal device being minimum; and/or,
among the plurality of network devices, the quality of the signal transmitted by the first network device being best.

35. The network device according to any one of claims 30 to 34, wherein the first differential signal quality is a difference between the second signal quality and the first signal quality.

36. The network device according to any one of claims 30 to 34, wherein the first differential signal quality D satisfies: $\text{logD} = \log\frac{R_2}{R_1}$ , wherein $R_2$ represents the second signal quality, and $R_1$ represents the first signal quality.

37. The network device according to any one of claims 30 to 36, wherein the first signal quality includes one or more of:

reference signal received power, RSRP, of the first signal;
reference signal received quality, RSRQ, of the first signal;
a received signal strength indicator, RSSI, of the first signal; and
a signal to interference plus noise ratio, SINR, of the first signal.

38. The network device according to claim 37, wherein in a case that the first signal quality includes the RSRP of the first signal, the RSRP satisfies: $\text{RSRP} = \frac{(RSRQ)*RSSI}{N}$ , wherein N is a number of resource blocks in an RSSI measurement bandwidth of a carrier.

39. A terminal device, comprising a memory and a processor, wherein the memory is configured to store a program, and the processor is configured to invoke the program in the memory to cause the terminal device to perform the method according to any one of claims 1 to 10.

40. A network device, comprising a memory and a processor, wherein the memory is configured to store a program, and the processor is configured to invoke the program in the memory to cause the network device to perform the method according to any one of claims 11 to 19.

41. An apparatus, comprising a processor configured to invoke a program from a memory to cause the apparatus to perform the method according to any one of claims 1 to 19.

**42.** A chip, comprising a processor configured to invoke a program from a memory to cause a device on which the chip is installed to perform the method according to any one of claims 1 to 19.

**43.** A computer-readable storage medium storing a program, wherein the program causes a computer to perform the method according to any one of claims 1 to 19.

**44.** A computer program product comprising a program, wherein the program causes a computer to perform the method according to any of claims 1 to 19.

**45.** A computer program, wherein the computer program causes a computer to perform the method according to any one of claims 1 to 19.

FIG. 1

FIG. 2

FIG. 3

FIG. 4

Network Device 500

Receiving Unit 510

FIG. 5

Apparatus 600

Processor
610

Memory
620

Transceiver
630

FIG. 6

## INTERNATIONAL SEARCH REPORT

| International application No. |
| --- |
| **PCT/CN2023/092329** |

**A. CLASSIFICATION OF SUBJECT MATTER**

H04W 64/00(2009.01)i

According to International Patent Classification (IPC) or to both national classification and IPC

**B. FIELDS SEARCHED**

Minimum documentation searched (classification system followed by classification symbols)

IPC:H04W H04L H04B

Documentation searched other than minimum documentation to the extent that such documents are included in the fields searched

Electronic data base consulted during the international search (name of data base and, where practicable, search terms used)

CNTXT, ENTXTC, WOTXT, USTXT, CNKI: 差分, 差异, 比, 质量, 功率, 强度, 定位, 距离, 协同, 协作, RSSI, RSRP, SINR, power, quality, intensity, difference, Ratio, position, location, distance, coordinate

**C. DOCUMENTS CONSIDERED TO BE RELEVANT**

| Category* | Citation of document, with indication, where appropriate, of the relevant passages | Relevant to claim No. |
| --- | --- | --- |
| X | CN 114076914 A (CHINA MOBILE IOT CO., LTD. et al.) 22 February 2022 (2022-02-22) description, paragraphs 23-94 | 1-45 |
| A | CN 112291705 A (TENCENT TECHNOLOGY (SHENZHEN) CO., LTD.) 29 January 2021 (2021-01-29) entire document | 1-45 |
| A | CN 115669113 A (QUALCOMM INC.) 31 January 2023 (2023-01-31) entire document | 1-45 |
| A | CN 115734152 A (HUAWEI TECHNOLOGIES CO., LTD.) 03 March 2023 (2023-03-03) entire document | 1-45 |
| A | WO 2014030341 A1 (NTT DOCOMO, INC.) 27 February 2014 (2014-02-27) entire document | 1-45 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2023** | **21 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/092329**

| Patent document cited in search report | | | Publication date (day/month/year) | Patent family member(s) | | | Publication date (day/month/year) |
|---|---|---|---|---|---|---|---|
| CN | 114076914 | A | 22 February 2022 | None | | | |
| CN | 112291705 | A | 29 January 2021 | HK | 40037788 | A0 | 18 June 2021 |
| CN | 115669113 | A | 31 January 2023 | BR | 112022018481 | A2 | 17 January 2023 |
| | | | | JP | 2023518726 | A | 08 May 2023 |
| | | | | TW | 202143752 | A | 16 November 2021 |
| | | | | KR | 20220159373 | A | 02 December 2022 |
| | | | | US | 2023112322 | A1 | 13 April 2023 |
| | | | | EP | 4128963 | A1 | 08 February 2023 |
| | | | | WO | 2021194825 | A1 | 30 September 2021 |
| | | | | IN | 202247041888 | A | 16 September 2022 |
| | | | | VN | 91891 | A | 26 December 2022 |
| CN | 115734152 | A | 03 March 2023 | WO | 2023029899 | A1 | 09 March 2023 |
| WO | 2014030341 | A1 | 27 February 2014 | JP | 2014041010 | A | 06 March 2014 |

Form PCT/ISA/210 (patent family annex) (July 2022)